# EUROPEAN PATENT SPECIFICATION

(11) **EP 3 449 174 B1**
(45) Date of publication and mention of the grant of the patent: **31.03.2021**
(21) Application number: 17790014.9
(22) Date of filing: 24.04.2017
(51) Int. Cl.: F17C 13/08, B60K 15/01, F02M 21/02

(54) **LNG TRUCK AND METHOD FOR ASSEMBLING AN LNG TRUCK**
FLÜSSIGERDGAS-LKW UND VERFAHREN ZUR MONTAGE EINES FLÜSSIGERDGAS-LKW
CAMION À GNL ET PROCÉDÉ D'ASSEMBLAGE D'UN CAMION À GNL

(30) Priority: 26.04.2016 SE 1650556
(43) Date of publication of application: 06.03.2019
(73) Proprietor: Scania CV AB, 151 87 Södertälje (SE)
(72) Inventor: HERMANSSON, Sara, 132 40 Saltsjö Boo (SE); OLSSON, Johan, 175 61 Järfälla (SE); SVENSSON, Jenny, 117 39 Stockholm (SE)
(74) Representative: Scania CV AB
(86) International application number: PCT/SE2017/050399
(87) International publication number: WO 2017/188881

(56) References cited:
- EP-A1- 2 792 525
- DE-A1-102014 007 038
- DE-U1-202013 102 467
- US-A1- 2006 218 941
- US-A1- 2011 288 738
- US-A1- 2015 112 506
- US-A1- 2016 023 548

## Description

### FIELD OF THE INVENTION AND PRIOR ART

The present invention relates to an LNG truck according to the preamble of claim 1. The invention also relates to a method for assembling an LNG truck.

In this description and the following claims, the expression "LNG vehicle" refers to a vehicle which is configured to use liquefied natural gas (LNG) as fuel, and the expression "LNG truck" refers to a truck which is configured to use liquefied natural gas as fuel.

When liquefied natural gas is used as fuel for a vehicle, the saturated natural gas is cooled down to a temperature of approximately -130°C and stored in a pressurized storage vessel of a cryogenic tank mounted to the chassis of the vehicle. A lower part of the storage space in the storage vessel is occupied by liquefied natural gas and an upper part of the storage space is occupied by vaporized natural gas. The pressure in the storage vessel is kept at a level adapted to the working pressure of the vehicle engine. The warmer ambient temperature will cause heat transfer to the tank. The effect of this heat input is warming of the liquefied natural gas, which in its turn will result in a vaporization of liquefied natural gas and thereby an increase of the pressure in the storage vessel. The vapour created due to the heat input is called boil-off gas, and the discharge of this vapour from the storage vessel is called venting. When the vehicle engine is running, liquefied natural gas is fed from the storage vessel to a heat exchanger where the liquefied natural gas is vaporized before being conducted to the vehicle engine. If the pressure in the storage vessel exceeds a given threshold value, the vehicle engine may be directly fed with boil-off gas from the storage vessel and the pressure in the storage vessel may thereby be maintained at a suitable level during the running of the vehicle engine. In order to avoid an excessive pressure in the storage vessel when the vehicle engine is not running, the cryogenic tank is provided with a venting unit comprising a primary relief valve and a secondary relief valve. The primary relief valve will open when the pressure in the storage vessel exceeds a lower first threshold value, for instance in the order of 16 bar, in order to release boil-off gas from the storage vessel and thereby lower the pressure therein. The secondary relief valve will open when the pressure in the storage vessel exceeds a higher second threshold value, for instance in the order of 24 bar, in order to release boil-off gas from the storage vessel in a situation when the primary relief valve malfunctions. According to current regulations, the boil-off gas may be released to the atmosphere on condition that certain requirements regarding how to release the boil-off gas are fulfilled. The following requirements are for instance stipulated by the UN ECE R110 standards when it comes to the release of boil-off gas via the primary relief valve:
- the boil-off gas must be vented away to a higher level through an open ended piping arrangement;
- the piping arrangement shall be sized to prevent flow restriction due to pressure drop; and
- gas exiting the piping arrangement may not impinge on enclosed areas on the LNG vehicle, on an engine intake or an engine exhaust of the LNG vehicle, on an air intake of the LNG vehicle, or on other vehicles.

A piping arrangement of the above-mentioned type normally consists of interconnected pipe sections of stainless steel.

On an LNG truck, the outlet end of the above-mentioned piping arrangement is suitably fixed to the driver's cab of the truck at a suitable height, if so possible. However, if the LNG truck has a tiltable driver's cab, i.e. a driver's cab which is hingedly connected to the chassis of the truck so as to allow the driver's cab to be tilted forwards to provide access for servicing or repair of the vehicle engine located under the driver's cab, it will not be possible to have any part of the piping arrangement fixed to the driver's cab as the piping arrangement would then interfere with the tilting of the driver's cab. If such an LNG truck has a fixed cargo body mounted to the chassis of the truck, for instance in the form of a box body, tank body, bulk body, flatbed body, concrete mixer body, refuse collection body or curtainside body, the outlet end of the above-mentioned piping arrangement may be fixed to the cargo body.

A truck which is to be equipped with a fixed cargo body of the above-mentioned type is normally delivered from a truck manufacturing plant with a driver's cab but no cargo body mounted to the chassis of the truck, whereupon a so-called body builder at a body building plant is engaged to mount the desired cargo body to the chassis of the truck after the transportation of the truck from the truck manufacturing plant to the body building plant. If such a truck is an LNG truck with tiltable driver's cab, the final mounting of the above-mentioned piping arrangement has to be carried out at the body building plant if the outlet end of the piping arrangement is to be fixed to the cargo body. The mounting of the piping arrangement at the body building plant will involve rather complicated and time-consuming pipe fitting and it is favourable if as much as possible of the installation work associated with the mounting of the piping arrangement could be carried out at the truck manufacturing plant.

EP 2792525 A1 discloses a device for supplying gas to a consumer, e.g. a combustion engine of a vehicle. The vehicle may be arranged with a LNG tank and a boil-off gas-tank which is supplied with boil-off gas from the LNG tank.

US 2016/023548 A1 discloses a vehicle having an engine, a body assembly and a tailgate pivotally attached to the body assembly. The tailgate is movable between an open position and a closed position to selectively expose an internal volume of the body assembly.

DE 202013102467 U1 discloses a vehicle with a drive motor and with a cooling unit. The cooling unit is driven by a gas-operated internal combustion engine. The vehicle has at least one tank for holding gas.

DE 102014007038 A1 discloses a manoeuvring system controlling the tilting action of a vehicle cab.

### OBJECT OF THE INVENTION

The object of the present invention is to offer a solution to the above-mentioned problem.

### SUMMARY OF THE INVENTION

According to the present invention, the above-mentioned object is achieved by an LNG truck having the features defined in claim 1.

The LNG truck of the present invention comprises:
- a chassis having a front part for supporting a driver's cab and a rear part for supporting a cargo body;
- a tiltable driver's cab mounted to the front part of the chassis;
- a cryogenic tank comprising a storage vessel for storing liquefied natural gas, wherein the cryogenic tank is mounted to the chassis; and
- a piping arrangement for discharging boil-off gas from the cryogenic tank to the atmosphere, wherein the piping arrangement comprises:
   - a first rigid conduit with an upstream end and a downstream end, the first rigid conduit being secured to the chassis and being connected to a vent outlet of the cryogenic tank at its upstream end in order to allow the first rigid conduit to receive boil-off gas released from the cryogenic tank via the vent outlet,
   - a second rigid conduit with an upstream end and a downstream end, wherein the second rigid conduit at its downstream end is provided with an outlet which opens into the surroundings in order to allow boil-off gas from the cryogenic tank to be discharged to the atmosphere via this outlet;
   - a holding member, wherein the second rigid conduit is fixed to the holding member and the holding member is intended to be mounted to a cargo body of the LNG truck in order to secure the second rigid conduit to the cargo body after a mounting of the cargo body to the rear part of the chassis; and
   - a flexible conduit arranged between the downstream end of the first rigid conduit and the upstream end of the second rigid conduit in order to form a flexible flow connection between the first rigid conduit and the second rigid conduit.

With the solution according to the present invention, the first rigid conduit of the piping arrangement may be fixed to the chassis of the LNG truck and connected to the cryogenic tank of the truck at the truck manufacturing plant and the truck may thereby leave the truck manufacturing plant with the first rigid conduit of the piping arrangement mounted to the truck and with the flexible conduit and the second rigid conduit of the piping arrangement connected to the first rigid conduit. The flexibility of the flexible conduit makes it easy for the body builder at the body building plant to mount the second rigid conduit of the piping arrangement in a suitable position on a cargo body after a mounting of the cargo body to the chassis of the truck. Very little and simple installation work is consequently required at the body building plant for the final mounting of the piping arrangement, which will reduce the required working time and the installation cost at the body building plant. The solution according to the present invention also reduces the risk of an incorrect installation of the piping arrangement at the body building plant.

The flexible conduit has the form of a hose, preferably of plastic material.

Another embodiment of the invention is characterized in:
- that an upstream end of the flexible conduit is secured to the downstream end of the first rigid conduit by means of a hose clamp; and/or
- that a downstream end of the flexible conduit is secured to the upstream end of the second rigid conduit by means of a hose clamp.

Hereby, one end of the flexible conduit may easily be released from one of the rigid conduits by a release of a hose clamp after the mounting of the cargo body to the chassis to thereby allow the flexible conduit to be cut into a length which is suitable with respect to the desired mounting position of the second rigid conduit on the cargo body, whereupon the flexible conduit easily may be reconnected to the rigid conduit in question by means of the same hose clamp.

According to another embodiment of the invention, the piping arrangement comprises a holding device which is configured to temporarily carry the holding member and the second rigid conduit before the mounting of the holding member to said cargo body, wherein the holding device is releasably mounted to the chassis and is to be removed from the chassis before the mounting of said cargo body to the chassis. The second rigid conduit and the associated holding member may be kept in a fixed position in relation to the chassis of the LNG truck by means of the holding device during the transportation of the truck from the truck manufacturing plant to the body building plant.

According to another embodiment of the invention, the holding device comprises a horizontally extending holding bracket for supporting a coil formed by the flexible conduit. Hereby, the flexible conduit may in a simple manner be temporarily fixed to the holding device after having been wound up into a coil.

Further advantageous features of the LNG truck of the present invention will appear from the following description and the dependent claims.

The invention also relates to a method having the features defined in claim 7 for assembling an LNG truck.

Further advantageous features of the method of the present invention will appear from the following description and the dependent claims.

### BRIEF DESCRIPTION OF THE DRAWINGS

With reference to the appended drawings, a specific description of embodiments of the invention cited as examples follows below. In the drawings:
- Fig 1: is a schematic perspective view of an LNG truck according to an embodiment of the present invention,
- Fig 2: is a perspective view of a piping arrangement included in the LNG truck of Fig 1,
- Figs 3-6: are perspective views of components which form part of the piping arrangement of Fig 2,
- Figs 7 and 8: are perspective views of a part of the chassis of the LNG truck shown in Fig 1, as seen before and after the mounting of a cryogenic tank to the chassis of the truck, and

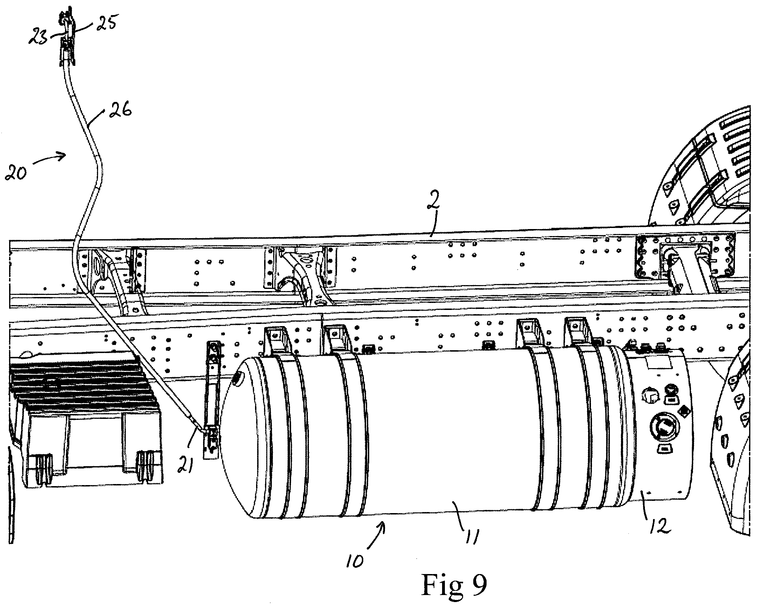

- Fig 9: is a perspective view corresponding to Fig 8, as seen with the second rigid conduit of the piping arrangement ready for mounting to a cargo body of the LNG truck.

### DETAILED DESCRIPTION OF EMBODIMENTS OF THE INVENTION

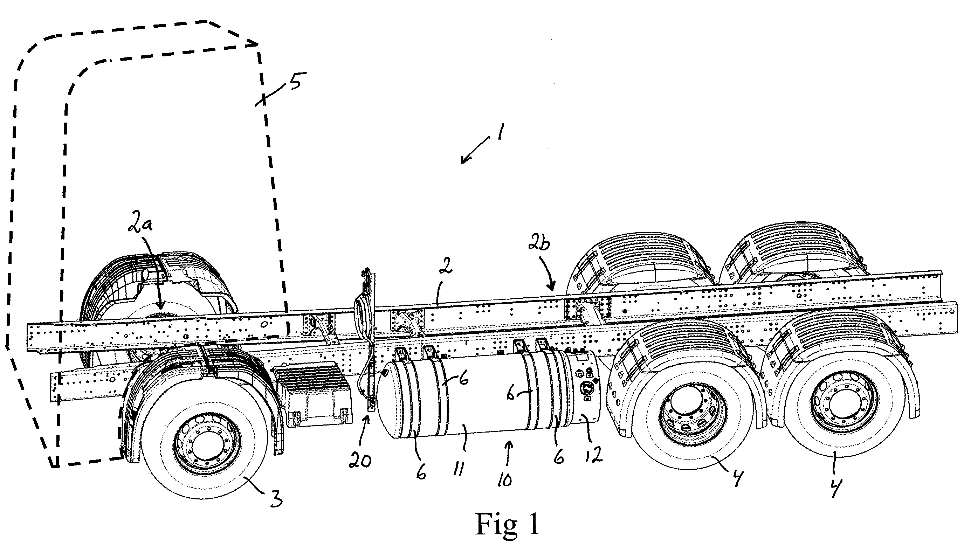

An LNG truck 1 according to an embodiment of the present invention is schematically illustrated in Fig 1. The truck 1 comprises a chassis 2, which has a front part 2a configured to support a driver's cab and a rear part 2b configured to support a cargo body (not shown). The truck 1 comprises a set of front wheels 3, a set of rear wheels 4 and a vehicle engine (not shown) in the form of a gas engine for propelling the truck. A tiltable driver's cab 5 (schematically illustrated by broken lines in Fig 1) is mounted to the front part 2a of the chassis 2. The vehicle engine is located under the driver's cab 5 and the driver's cab is hingedly connected to the chassis 2 in order to allow the driver's cab to be tilted forwards to provide access for servicing or repair of the vehicle engine.

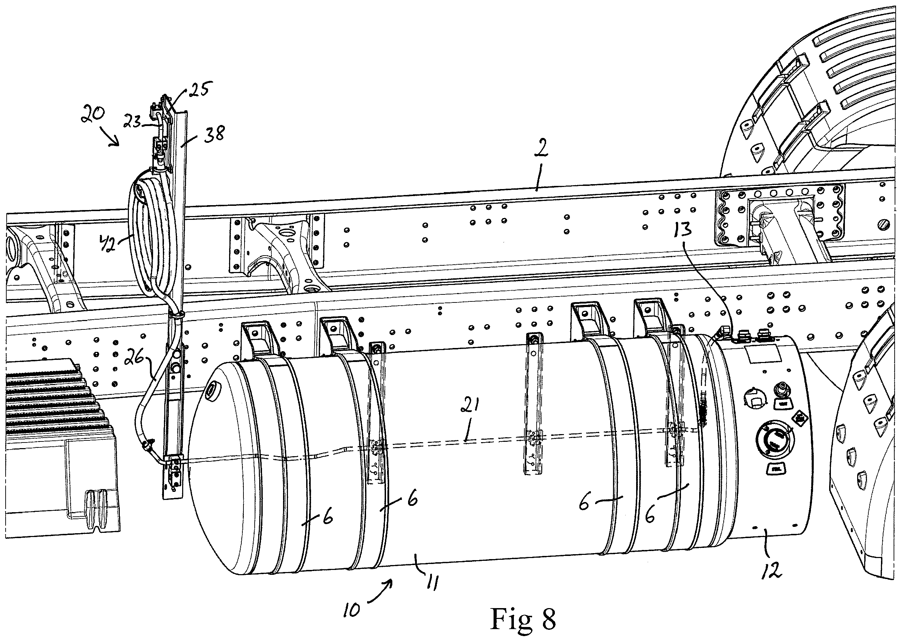

The truck 1 further comprises a cryogenic tank 10 and a piping arrangement 20 for discharging boil-off gas from the cryogenic tank 10 to the atmosphere. The cryogenic tank 10 is mounted to the chassis 2 by means of suitable mounting members 6 and comprises a storage vessel 11 for storing liquefied natural gas to be used as fuel for the vehicle engine. The cryogenic tank 10 is provided with a venting unit 12, which is fixed to the storage vessel 11 and which comprises a primary relief valve (not shown) and a secondary relief valve (not shown). The primary relief valve will open when the pressure in the storage vessel 11 exceeds a lower first threshold value, for instance in the order of 16 bar, in order to release boil-off gas from the storage vessel 11 and thereby lower the pressure therein. The secondary relief valve will open when the pressure in the storage vessel 11 exceeds a higher second threshold value, for instance in the order of 24 bar, in order to release boil-off gas from the storage vessel 11 in a situation when the primary relief valve malfunctions. The cryogenic tank 10 comprises a vent outlet 13 (see Fig 8) which is connected to the primary relief valve, wherein boil-off gas released from the storage vessel 11 via the primary relief valve will leave the cryogenic tank 10 through this vent outlet 13.

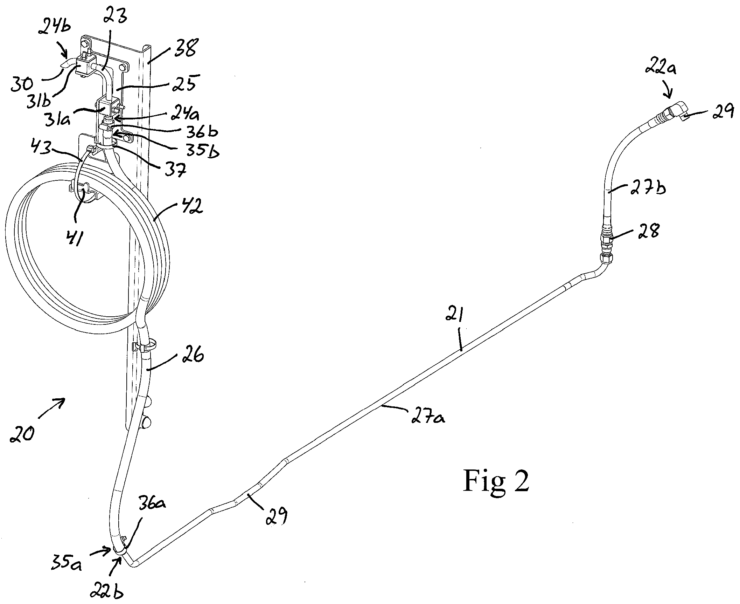

The above-mentioned piping arrangement 20 is illustrated in closer detail in Fig 2 and comprises:
- a first rigid conduit 21 with an upstream end 22a and a downstream end 22b;
- a second rigid conduit 23 with an upstream end 24a and a downstream end 24b;
- a holding member 25, to which the second rigid conduit 23 is fixed; and
- a flexible conduit 26 arranged between the downstream end 22b of the first rigid conduit 21 and the upstream end 24a of the second rigid conduit 23 in order to form a flexible flow connection between the first rigid conduit 21 and the second rigid conduit 23.

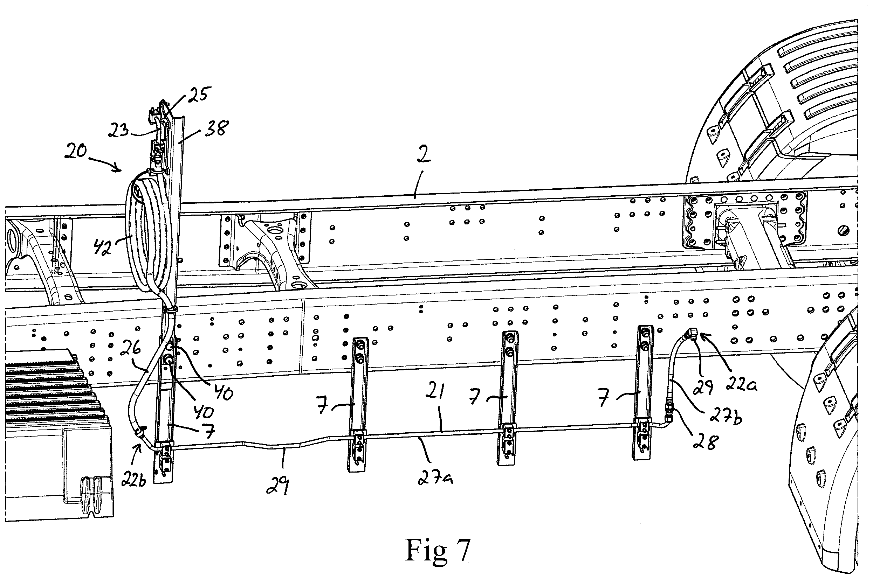

The first rigid conduit 21 is secured to the chassis 2 of the truck 1 by means of suitable mounting brackets 7, as illustrated in Fig 7, and is connected to the vent outlet 13 of the cryogenic tank 10 at its upstream end 22a, as illustrated in Fig 8, in order to allow the first rigid conduit 21 to receive boil-off gas released from the cryogenic tank 10 via the vent outlet 13. A coupling member 29 (see Figs 2 and 7) is provided at the upstream end 22a of the first rigid conduit 21, wherein this coupling member 29 is configured for engagement with a corresponding coupling member provided at the vent outlet 13. In the illustrated example, the first rigid conduit 21 comprises a first pipe section 27a, which is to extend along the chassis 2 when the first rigid conduit 21 is mounted to the chassis, and a second pipe section 27b which is connected to the first pipe section 27a by means of a pipe coupling 28 and which extends upwards from the first pipe section 27a in order to form a connection between the first pipe section 27a and the above-mentioned vent outlet 13 on the cryogenic tank 10. As an alternative, the first rigid conduit 21 may be formed by one single pipe section or by more than two interconnected pipe sections.

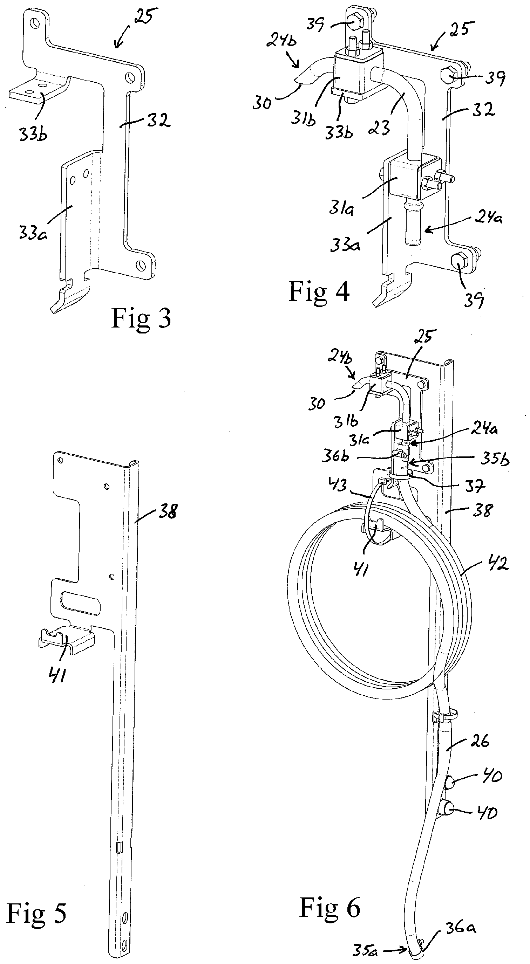

The second rigid conduit 23 is at its downstream end 24b provided with an outlet 30 which opens into the surroundings in order to allow boil-off gas from the cryogenic tank 10 to be discharged to the atmosphere via this outlet 30. The second rigid conduit 23 is fixed to the holding member 25 and the holding member 25 is in its turn intended to be mounted to a cargo body of the LNG truck 1 in order to secure the second rigid conduit 23 to the cargo body after a mounting of the cargo body to the rear part 2b of the chassis 2. In the illustrated example, the second rigid conduit 23 has the shape of an inverted J and is fixed to the holding member 25 by means of pipe holding elements 31a, 31b, which are bolted to the holding member 25. However, the second rigid conduit 23 may of course have any other suitable shape and it may be fixed to the holding member 25 in any other suitable manner. In the illustrated example, the holding member 25 comprises a flat base part 32 and two flaps 33a, 33b (see Figs 3 and 4) which extend perpendicularly from the base part 32, wherein a first pipe holding element 31a is bolted to a first flap 32a and the other pipe holding element 31b is bolted to the other flap 32b. The holding member 25 may also have any other suitable design.

The first and second rigid conduits 21, 23 are preferably of stainless steel.

One or more drain holes (not shown) are with advantage provided in the lowermost part 29 of the first rigid conduit 21 to thereby allow water or any other liquid that may enter the piping arrangement 20 via the outlet 30 of the second rigid conduit 23 to be drained off from the piping arrangement 20 via these drain holes.

The flexible conduit 26 has the form of a hose, preferably of plastic material. The flexible conduit 26 is with advantage made of PTFE (PTFE = polytetrafluoroethylene) or internally lined with a layer of PTFE, in order to benefit from the excellent methane resistant properties of PTFE. An upstream end 35a of the flexible conduit 26 is connected to the downstream end 22b of the first rigid conduit 21, for instance by means of a first hose clamp 36a, and a downstream end 35b of the flexible conduit is connected to the upstream end 24a of the second rigid conduit 23, for instance by means of a second hose clamp 36b. The flexible conduit 26 suitably has a length of at least 2 m, preferably at least 3 m, and up to about 4-5 m. The upper end of the flexible conduit 26 may be fixed to the holding member 25 by means of a cable tie 37 or the similar, as illustrated in Figs 2 and 6.

The piping arrangement 20 preferably also comprises a holding device 38 which is configured to temporarily carry the holding member 25 and the second rigid conduit 23 before the mounting of the holding member 25 to the above-mentioned cargo body. The holding member 25 may be releasably secured to the holding device 38 by means of suitable fastening elements 39 (see Figs 4 and 6), for instance in the form of bolts, and is to be removed from the holding device 38 before the mounting of the holding member 25 to the cargo body. The holding device 38 is configured to be releasably mounted to the chassis 2 by means of suitable fastening elements 40 (see Fig 7) and is to be removed from the chassis 2 before the mounting of the cargo body to the chassis. In the illustrated example, the holding device 38 has the form of a vertical upright which extends vertically upwards from the chassis 2. The holding device 38 is with advantage provided with a horizontally extending holding bracket 41 for supporting a coil 42 formed by the flexible conduit 26. The coil 42 may be releasably fixed to the holding bracket 41 by means of a cable tie 43 or the similar, as illustrated in Figs 2 and 6.

The LNG truck 1 illustrated in Fig 1 is assembled at a truck manufacturing plant, where:
- the tiltable driver's cab 5 is mounted to the chassis 2 at the front part 2a thereof;
- the first rigid conduit 21 is mounted to the chassis 2;
- the cryogenic tank 10 is mounted to the chassis 2;
- the upstream end 22a of the first rigid conduit 21 is connected to the vent outlet 13 of the cryogenic tank 10 in order to allow the first rigid conduit 21 to receive boil-off gas released from the cryogenic tank 10 via the vent outlet 13 and allow this boil-off gas to be discharged to the atmosphere via the outlet 30 of the second rigid conduit 23; and
- the holding device 38 is mounted to the chassis 2, wherein the holding device 38 carries the holding member 25, the second rigid conduit 23 and the coil 42 formed by the flexible conduit 26.

When the assembly and vehicle testing at the truck manufacturing plant have been completed, the LNG truck 1 is transported from the truck manufacturing plant to a body building plant, where:
- the holding device 38 is removed from the chassis 2;
- a cargo body is mounted to a rear part 2b of the chassis 2 behind the driver's cab 5; and
- the holding member 25 is released from the holding device 38 and thereafter mounted to the cargo body after the mounting of the cargo body to the chassis 2 to thereby secure the second rigid conduit 23 to the cargo body.

When the final position for the second rigid conduit 23 has been established, one of the hose clamps 36a, 36b may be released in order to release one end of the flexible conduit 26 from one of the first and second rigid conduits 21, 23, whereupon the flexible conduit 26 is cut into an appropriate length and reconnected to the rigid conduit in question by means of the hose clamp.

The cargo body is for instance a box body, tank body, bulk body, flatbed body, concrete mixer body, refuse collection body, curtainside body or any other suitable type of fixed cargo body. The cargo body may be mounted directly onto the chassis 2. As an alternative, a subframe may be provided between the chassis 2 and the cargo body.

The invention is of course not in any way restricted to the embodiments described above. On the contrary, many possibilities to modifications thereof will be apparent to a person with ordinary skill in the art without departing from the scope of the invention as defined in the appended claims.

## Claims

1. An LNG truck comprising:
- a chassis (2) having a front part (2a) for supporting a driver's cab (5) and a rear part (2b) for supporting a cargo body;
- a tiltable driver's cab (5) mounted to the front part (2a) of the chassis (2);
- a cryogenic tank (10) comprising a storage vessel (11) for storing liquefied natural gas, wherein the cryogenic tank (10) is mounted to the chassis (2); and
- a piping arrangement (20) for discharging boil-off gas from the cryogenic tank (10) to the atmosphere, wherein the piping arrangement (20) comprises a first rigid conduit (21) with an upstream end (22a) and a downstream end (22b), the first rigid conduit (21) being secured to the chassis (2) and being connected to a vent outlet (13) of the cryogenic tank (10) at its upstream end (22a) in order to allow the first rigid conduit (21) to receive boil-off gas released from the cryogenic tank (10) via the vent outlet (13),
**characterized in that** the piping arrangement (20) further comprises:
- a second rigid conduit (23) with an upstream end (24a) and a downstream end (24b), wherein the second rigid conduit (23) at its downstream end (24b) is provided with an outlet (30) which opens into the surroundings in order to allow boil-off gas from the cryogenic tank (10) to be discharged to the atmosphere via this outlet (30);
- a holding member (25), wherein the second rigid conduit (23) is fixed to the holding member (25) and the holding member (25) is intended to be mounted to a cargo body of the LNG truck in order to secure the second rigid conduit (23) to the cargo body after a mounting of the cargo body to the rear part (2b) of the chassis (2); and
- a flexible conduit (26) arranged between the downstream end (22b) of the first rigid conduit (21) and the upstream end (24a) of the second rigid conduit (23) in order to form a flexible flow connection between the first rigid conduit (21) and the second rigid conduit (23), wherein the flexible conduit (26) has the form of a hose, preferably of plastic material.

2. An LNG truck according to claim 1, **characterized in:**
- **that** an upstream end (35a) of the flexible conduit (26) is secured to the downstream end (22b) of the first rigid conduit (21) by means of a hose clamp (36a); and/or
- **that** a downstream end (35b) of the flexible conduit (26) is secured to the upstream end (24a) of the second rigid conduit (23) by means of a hose clamp (36b).

3. An LNG truck according to any of claims 1-2, **characterized in that** the piping arrangement (20) comprises a holding device (38) which is configured to temporarily carry the holding member (25) and the second rigid conduit (23) before the mounting of the holding member (25) to said cargo body, wherein the holding device (38) is releasably mounted to the chassis (2) and is to be removed from the chassis (2) before the mounting of said cargo body to the chassis (2).

4. An LNG truck according to claim 3, **characterized in that** the holding device (38) comprises a horizontally extending holding bracket (41) for supporting a coil (42) formed by the flexible conduit (26).

5. An LNG truck according to claim 3 or 4, **characterized in that** the holding device (38) has the form of a vertical upright.

6. An LNG truck according to any of claims 1-5, **characterized in that** the flexible conduit (26) has a length of at least 2 m, preferably at least 3 m.

7. A method for assembling an LNG truck (1), wherein the method comprises a first assembly phase and a subsequent second assembly phase,
wherein the first assembly phase comprises the following steps:
- providing a chassis (2);
- providing a cryogenic tank (10) comprising a storage vessel (11) for storing liquefied natural gas;
- providing a piping arrangement (20), which is to be used for discharging boil-off gas from the cryogenic tank (10) to the atmosphere and which comprises:
• a first rigid conduit (21),
• a second rigid conduit (23), which at a downstream end (24b) is provided with an outlet (30) which opens into the surroundings,
• a flexible conduit (26), which is arranged between a downstream end (22b) of the first rigid conduit (21) and an upstream end (24a) of the second rigid conduit (23) in order to form a flexible flow connection between the first rigid conduit (21) and the second rigid conduit (23), wherein the flexible conduit (26) has the form of a hose, preferably of plastic material, and
• a holding member (25), to which the second rigid conduit (23) is fixed;
- mounting a tiltable driver's cab (5) to the chassis (2) at a front part (2a) thereof;
- mounting the first rigid conduit (21) to the chassis (2);
- mounting the cryogenic tank (10) to the chassis (2); and
- connecting an upstream end (22a) of the first rigid conduit (21) to a vent outlet (13) of the cryogenic tank (10) in order to allow the first rigid conduit (21) to receive boil-off gas released from the cryogenic tank (10) via the vent outlet (13) and allow this boil-off gas to be discharged to the atmosphere via the outlet (30) of the second rigid conduit (23),
and wherein the second assembly phase comprises the following steps:
- mounting a cargo body to a rear part (2b) of the chassis (2) behind the driver's cab (5); and
- mounting the holding member (25) to the cargo body to thereby secure the second rigid conduit (23) to the cargo body.

8. A method according to claim 7, **characterized in that** the first assembly phase is performed at a truck manufacturing plant and the second assembly phase is performed at a body building plant after transportation of the LNG truck (1) from the truck manufacturing plant to the body building plant.

9. A method according to claim 7 or 8, **characterized in:**
- **that** a holding device (38), which carries the holding member (25) and the second rigid conduit (23), is mounted to the chassis (2) in said first assembly phase;
- **that** the holding device (38) is removed from the chassis (2) in said second assembly phase before the mounting of the cargo body to the chassis (2); and
- **that** the holding member (25) is released from the holding device (38) in said second assembly phase, and thereafter mounted to the cargo body after the mounting of the cargo body to the chassis (2).

## Patentansprüche

1. Flüssigerdgas-LKW, mit:
- einem Fahrgestell (2), das einen vorderen Teil (2a) zum Abstützen einer Fahrerkabine (5) und einen hinteren Teil (2b) zum Abstützen eines Frachtaufbaus hat,
- einer kippbaren Fahrerkabine (5), die an dem vorderen Teil (2a) des Fahrgestells (2) angebracht ist,
- einem Tieftemperaturtank (10) mit einem Speicherbehälter (11) zum Speichern von verflüssigtem Erdgas, wobei der Tieftemperaturtank (10) an dem Fahrgestell (2) montiert ist, und
- einer Rohrleitungsanordnung (20) zum Abführen von Abdampfgas aus dem Tieftemperaturtank (10) in die Atmosphäre, wobei die Rohrleitungsanordnung (20) eine erste starre Leitung (21) mit einem stromaufwärtigen Ende (22a) und einem stromabwärtigen Ende (22b) aufweist, wobei die erste starre Leitung (21) an dem Fahrgestell (2) befestigt ist und mit einem Entgasungsauslass (13) des Tieftemperaturtanks (10) an ihrem stromaufwärtigen Ende (22a) verbunden ist, um der ersten starren Leitung (21) zu ermöglichen, aus dem Tieftemperaturtank (10) freigesetztes Abdampfgas über den Entgasungsauslass (13) zu empfangen,
**dadurch gekennzeichnet, dass** die Rohrleitungsanordnung (20) ferner aufweist:
- eine zweite starre Leitung (23) mit einem stromaufwärtigen Ende (24a) und einem stromabwärtigen Ende (24b), wobei die zweite starre Leitung (23) an ihrem stromabwärtigen Ende (24b) mit einem Auslass (30) versehen ist, der in die Umgebung mündet, um es Abdampfgas aus dem Tieftemperaturtank (10) zu ermöglichen, über diesen Auslass (30) in die Atmosphäre abgegeben zu werden,
- ein Haltebauteil (25), wobei die zweite starre Leitung (23) an dem Haltebauteil (25) befestigt ist und das Haltebauteil (25) dazu vorgesehen ist, an einem Frachtaufbau des Flüssigerdgas-LKWs angebracht zu werden, um nach einer Montage des Frachtaufbaus an dem hinteren Teil (2b) des Fahrgestells (2) die zweite starre Leitung (23) an dem Frachtaufbau zu befestigen, und
- eine flexible Leitung (26), die zwischen dem stromabwärtigen Ende (22b) der ersten starren Leitung (21) und dem stromaufwärtigen Ende (24a) der zweiten starren Leitung (23) angeordnet ist, um eine flexible Strömungsverbindung zwischen der ersten starren Leitung (21) und der zweiten starren Leitung (23) zu bilden, wobei die flexible Leitung (26) die Form eines Schlauchs, vorzugsweise aus Kunststoffmaterial, hat.

2. Flüssigerdgas-LKW nach Anspruch 1, **dadurch gekennzeichnet:**
- **dass** ein stromaufwärtiges Ende (35a) der flexiblen Leitung (26) mittels einer Schlauchklemme (36a) an dem stromabwärtigen Ende (22b) der ersten starren Leitung (21) befestigt ist, und/oder
- **dass** ein stromabwärtiges Ende (35b) der flexiblen Leitung (26) mittels einer Schlauchklemme (36b) an dem stromaufwärtigen Ende (24a) der zweiten starren Leitung (23) befestigt ist.

3. Flüssigerdgas-LKW nach einem der Ansprüche 1 bis 2, **dadurch gekennzeichnet, dass** die Rohrleitungsanordnung (20) eine Halteeinrichtung (38) umfasst, die dazu ausgeführt ist, das Haltebauteil (25) und die zweite starre Leitung (23) vor der Montage des Haltebauteils (25) an dem Frachtaufbau vorübergehend zu tragen, wobei die Halteeinrichtung (38) lösbar an dem Fahrgestell (2) angebracht ist und von dem Fahrgestell (2) vor der Montage des Frachtaufbaus an dem Fahrgestell (2) zu entfernen ist.

4. Flüssigerdgas-LKW nach Anspruch 3, **dadurch gekennzeichnet, dass** die Halteeinrichtung (38) einen horizontal verlaufenden Halter (41) zum Halten einer aus der flexiblen Leitung (26) gebildeten Spirale (42) aufweist.

5. Flüssigerdgas-LKW nach Anspruch 3 oder 4, **dadurch gekennzeichnet, dass** die Halteeinrichtung (38) die Gestalt eines vertikalen Pfostens hat.

6. Flüssigerdgas-LKW nach einem der Ansprüche 1 bis 5, **dadurch gekennzeichnet, dass** die flexible Leitung (26) eine Länge von wenigstens 2 m, vorzugsweise wenigstens 3 m hat.

7. Verfahren zur Montage eines Flüssigerdgas-LKWs (1), wobei das Verfahren eine erste Montagephase und eine anschließende zweite Montagephase umfasst, wobei die erste Montagephase die folgenden Schritte umfasst:
- Bereitstellen eines Fahrgestells (2),
- Bereitstellen eines Tieftemperaturtanks (10) mit einem Speicherbehälter (11) zum Speichern von verflüssigtem Erdgas,
- Bereitstellen einer Rohrleitungsanordnung (20), die zum Abführen von Abdampfgas aus dem Tieftemperaturtank (10) in die Atmosphäre verwendet werden soll und die aufweist:
• eine erste starre Leitung (21),
• eine zweite starre Leitung (23), die an einem stromabwärtigen Ende (24b) mit einem Auslass (30) versehen ist, der in die Umgebung mündet,
• eine flexible Leitung (26), die zwischen einem stromabwärtigen Ende (22b) der ersten starren Leitung (21) und einem stromaufwärtigen Ende (24a) der zweiten starren Leitung (23) angeordnet ist, um eine flexible Strömungsverbindung zwischen der ersten starren Leitung (21) und der zweiten starren Leitung (23) zu bilden, wobei die flexible Leitung (26) die Form eines Schlauchs, vorzugsweise aus Kunststoffmaterial, hat, und
• ein Haltebauteil (25), an dem die zweite starre Leitung (23) befestigt ist,
- Montieren einer kippbaren Fahrerkabine (5) an das Fahrgestell (2) an einem vorderen Teil (2a) desselben,
- Montieren der ersten starren Leitung (21) an dem Fahrgestell (2),
- Montieren des Tieftemperaturtanks (10) an dem Fahrgestell (2), und
- Verbinden eines stromaufwärtigen Endes (22a) der ersten starren Leitung (21) mit einem Entgasungsauslass (13) des Tieftemperaturtanks (10), um der ersten starren Leitung (21) zu ermöglichen, aus dem Tieftemperaturtank (10) freigesetztes Abdampfgas über den Entgasungsauslass (13) zu empfangen, und diesem Abdampfgas zu ermöglichen, durch den Auslass (30) der zweiten starren Leitung (23) in die Atmosphäre abgegeben zu werden,
und wobei die zweite Montagephase die folgenden Schritte umfasst:
- Montieren eines Frachtaufbaus an einen hinteren Teil (2a) des Fahrgestells (2) hinter der Fahrerkabine (5), und
- Montieren des Haltebauteils (25) an den Frachtaufbau, um dadurch die zweite starre Leitung (23) an dem Frachtaufbau zu befestigen.

8. Verfahren nach Anspruch 7, **dadurch gekennzeichnet, dass** die erste Montagephase in einem Lastwagenproduktionswerk ausgeführt wird und die zweite Montagephase in einem Fahrzeugaufbauherstellungswerk nach einem Transport des Flüssigerdgas-LKWs (1) aus dem Lastwagenproduktionswerk in das Fahrzeugaufbauherstellungswerk durchgeführt wird.

9. Verfahren nach Anspruch 7 oder 8, **dadurch gekennzeichnet:**
- **dass** eine Halteeinrichtung (38), die das Haltebauteil (25) und die zweite starre Leitung (23) trägt, in der ersten Montagephase an dem Fahrgestell (2) angebracht wird,
- **dass** die Halteeinrichtung (38) in der zweiten Montagephase vor der Montage des Frachtaufbaus an dem Fahrgestell (2) von dem Fahrgestell (2) entfernt wird, und
- **dass** das Haltebauteil (25) in der zweiten Montagephase von der Halteeinrichtung (38) gelöst und dann nach der Montage des Frachtaufbaus an dem Fahrgestell (2) an dem Frachtaufbau angebracht wird.

## Revendications

1. Camion GNL comprenant :
- un châssis (2) ayant une partie avant (2a) pour supporter une cabine de conduite (5) et une partie arrière (2b) pour supporter un corps de chargement ;
- une cabine de conduite inclinable (5) montée sur la partie avant (2a) du châssis (2) ;
- un réservoir cryogénique (10) comprenant une cuve de stockage (11) pour stocker du gaz naturel liquéfié, dans lequel le réservoir cryogénique (10) est monté sur le châssis (2) ; et
- un système de tuyauterie (20) pour décharger du gaz d'évaporation depuis le réservoir cryogénique (10) vers l'atmosphère, dans lequel le système de tuyauterie (20) comprend un premier conduit rigide (21) avec une extrémité amont (22a) et une extrémité aval (22b), le premier conduit rigide (21) étant attaché au châssis (2) et étant raccordé à une sortie d'évent (13) du réservoir cryogénique (10) au niveau de son extrémité amont (22a) afin de permettre au premier conduit rigide (21) de recevoir du gaz d'évaporation libéré depuis le réservoir cryogénique (10) via la sortie d'évent (13),
**caractérisé en ce que** le système de tuyauterie (20) comprend en outre :
- un second conduit rigide (23) avec une extrémité amont (24a) et une extrémité aval (24b), dans lequel le second conduit rigide (23) est muni, au niveau de son extrémité aval (24b), d'une sortie (30) qui débouche dans l'environnement afin de permettre au gaz d'évaporation du réservoir cryogénique (10) d'être évacué vers l'atmosphère via cette sortie (30) ;
- un élément de maintien (25), dans lequel le second conduit rigide (23) est fixé à l'élément de maintien (25) et l'élément de maintien (25) est destiné à être monté sur un corps de chargement du camion GNL afin d'attacher le second conduit rigide (23) au corps de chargement après un montage du corps de chargement sur la partie arrière (2b) du châssis (2) ; et
- un conduit flexible (26) disposé entre l'extrémité aval (22b) du premier conduit rigide (21) et l'extrémité amont (24a) du second conduit rigide (23) afin de former un raccordement d'écoulement flexible entre le premier conduit rigide (21) et le second conduit rigide (23), dans lequel le conduit flexible (26) a la forme d'un tuyau, de préférence en matière plastique.

2. Camion GNL selon la revendication 1, **caractérisé en ce que** :
- une extrémité amont (35a) du conduit flexible (26) est attachée à l'extrémité aval (22b) du premier conduit rigide (21) au moyen d'un collier de serrage (36a) ; et/ou
- une extrémité aval (35b) du conduit flexible (26) est attachée à l'extrémité amont (24a) du second conduit rigide (23) au moyen d'un collier de serrage (36b).

3. Camion GNL selon l'une quelconque des revendications 1-2, **caractérisé en ce que** le système de tuyauterie (20) comprend un dispositif de maintien (38) qui est configuré pour porter temporairement l'élément de maintien (25) et le second conduit rigide (23) avant le montage de l'élément de maintien (25) sur ledit corps de chargement, dans lequel le dispositif de maintien (38) est monté de manière amovible sur le châssis (2) et doit être retiré du châssis (2) avant le montage dudit corps de chargement sur le châssis (2).

4. Camion GNL selon la revendication 3, **caractérisé en ce que** le dispositif de maintien (38) comprend un support de maintien (41) s'étendant horizontalement pour supporter une bobine (42) formée par le conduit flexible (26).

5. Camion GNL selon la revendication 3 ou 4, **caractérisé en ce que** le dispositif de maintien (38) a la forme d'un montant vertical.

6. Camion GNL selon l'une quelconque des revendications 1 à 5, **caractérisé en ce que** le conduit flexible (26) a une longueur d'au moins 2 m, de préférence d'au moins 3 m.

7. Procédé d'assemblage d'un camion GNL (1), dans lequel le procédé comprend une première phase d'assemblage et une seconde phase d'assemblage subséquente,
dans lequel la première phase d'assemblage comprend les étapes suivantes :
- la fourniture d'un châssis (2) ;
- la fourniture d'un réservoir cryogénique (10) comprenant une cuve de stockage (11) pour stocker du gaz naturel liquéfié ;
- la fourniture d'un système de tuyauterie (20), qui doit être utilisé pour décharger du gaz d'évaporation depuis le réservoir cryogénique (10) vers l'atmosphère et qui comprend :
• un premier conduit rigide (21),
• un second conduit rigide (23), qui est muni au niveau d'une extrémité aval (24b) d'une sortie (30) qui débouche dans l'environnement,
• un conduit flexible (26), qui est disposé entre une extrémité aval (22b) du premier conduit rigide (21) et une extrémité amont (24a) du second conduit rigide (23) afin de former un raccordement d'écoulement flexible entre le premier conduit rigide (21) et le second conduit rigide (23), dans lequel le conduit flexible (26) a la forme d'un tuyau, de préférence en matière plastique, et
• un élément de maintien (25), auquel le second conduit rigide (23) est fixé ;
- le montage d'une cabine de conduite inclinable (5) sur le châssis (2) au niveau d'une partie avant (2a) de celui-ci ;
- le montage du premier conduit rigide (21) sur le châssis (2) ;
- le montage du réservoir cryogénique (10) sur le châssis (2) ; et
- le raccordement d'une extrémité amont (22a) du premier conduit rigide (21) à une sortie d'évent (13) du réservoir cryogénique (10) afin de permettre au premier conduit rigide (21) de recevoir du gaz d'évaporation libéré depuis le réservoir cryogénique (10) via la sortie d'évent (13) et de permettre à ce gaz d'évaporation d'être évacué dans l'atmosphère via la sortie (30) du second conduit rigide (23),
et dans lequel la seconde phase d'assemblage comprend les étapes suivantes :
- le montage d'un corps de chargement sur une partie arrière (2b) du châssis (2) derrière la cabine de conduite (5) ; et
- le montage de l'élément de maintien (25) sur le corps de chargement pour attacher ainsi le second conduit rigide (23) sur le corps de chargement.

8. Procédé selon la revendication 7, **caractérisé en ce que** la première phase d'assemblage est réalisée au niveau d'une usine de fabrication de camions et la seconde phase d'assemblage est réalisée au niveau d'une usine de carrosserie après le transport du camion GNL (1) depuis l'usine de fabrication de camions jusqu'à l'usine de carrosserie.

9. Procédé selon la revendication 7 ou 8, **caractérisé en ce que** :
- un dispositif de maintien (38), qui porte l'élément de maintien (25) et le second conduit rigide (23), est monté sur le châssis (2) dans ladite première phase d'assemblage ;
- le dispositif de maintien (38) est retiré du châssis (2) dans ladite seconde phase d'assemblage avant le montage du corps de chargement sur le châssis (2) ; et
- l'élément de maintien (25) est libéré du dispositif de maintien (38) dans ladite seconde phase d'assemblage, et ensuite monté sur le corps de chargement après le montage du corps de chargement sur le châssis (2).
